Europäisches Patentamt

European Patent Office

Office européen des brevets

(11) Veröffentlichungsnummer: **0 266 550**
**A1**

## (12) EUROPÄISCHE PATENTANMELDUNG

(21) Anmeldenummer: **87114179.2**

(51) Int. Cl.⁴: **B60R 9/04**

(22) Anmeldetag: **29.09.87**

(30) Priorität: **03.11.86 DE 3637288**

(43) Veröffentlichungstag der Anmeldung:
**11.05.88 Patentblatt 88/19**

(84) Benannte Vertragsstaaten:
**AT CH DE FR IT LI**

(71) Anmelder: **BAYERISCHE MOTOREN WERKE**
**Aktiengesellschaft**
**Postfach 40 02 40 Petuelring 130 - AJ-36**
**D-8000 München 40(DE)**

(72) Erfinder: **Ball, Wilfried**
**Breslauerstrasse 24**
**D-8312 Dingolfing(DE)**

(74) Vertreter: **Dexheimer, Rolf**
**Bayerische Motoren Werke**
**Aktiengesellschaft Postfach 40 02 40**
**Petuelring 130 - AJ-21**
**D-8000 München 40(DE)**

(54) Gepäckträger für ein Kraftfahrzeug, insbesondere Personenkraftwagen.

(57) Ein am Gepäckraumdeckel (2) eines Personenkraftwagens befestigter Gepäckträger (1) hat unterschiedlich hohe Tragelemente (3). diese sind mit
einer Tragplatte (4) versehen, von der ein
hohlzylindrischer Lagerbolzen (5) absteht. An diesem
ist eine Lagerhülse (9) der Lasttrageinrichtung (7)
drehbar gelagert, so daß diese um eine Achse (a)
drehbar ist (Pfeilrichtungen c und d)

Fig. 2

## Gepäckträger für ein Kraftfahrzeug, insbesondere Personenkraftwagen

Die Erfindung bezieht sich auf einen Gepäckträger der im Oberbegriff des Patentanspruchs 1 genannten und aus der PCT-Anmeldung WO 83/02755 hervorgehenden Art.

Bei dem bekannten Gepäckträger sind die beiden Tragelemente mit einem rechteckförmigen Rahmen verbunden, an dessen Schmalseiten jeweils ein Schwenkhebel angelenkt ist. diese sind ihrerseits an einer Lasttrageinrichtung schwenkbar gelagert, so daß letztere zum Be-und Entladen um die Fahrzeuglängsachse schwenkbar ist. In Transportlage übergreifen dabei die an den Schmalseiten der Lasttrageinrichtung vorgesehen, nach unten offenen U-Profile jeweils die an den Schmalseiten des rechteckförmigen Rahmens vorgesehenen Querträger, wodurch die Lasttrageinrichtung arretiert ist.

Demgegenüber ist es Aufgabe der Erfindung, einen Gepäckträger der im Oberbegriff des Patentanspruchs 1 genannten Gattung derart auszubilden, daß sich die Lasttrageinrichtung in eine andere Richtung als umdie Fahrzeuglängsachse verlagern läßt.

Zur Lösung der Aufgabe sind die im kennzeichnenden Teil des Patentanspruchs 1 dargelegten Merkmale vorgesehen.

Da die Lasttrageinrichtung erfindungsgemäß um eine lotrecht zu ihrer Auflageebene verlaufende Achse drehbar ist, kann sie vorteilhafterweise zum Be-und Entladen in eine griffgünstige Position gedreht werden.

Nachdem ein Gepäckträger üblicherweise zwei im Abstand voneinander liegende Tragelemente aufweist, werden diese durch eine Tragplatte starr miteinander verbunden, wobei von deren Ebene ein Lagerbolzen nach oben absteht, um den die Lasttrageinrichtung drehbar ist (Merkmale der Patentansprüche 2 und 3).

Eine zum Transport für Skier dienende Lasttrageinrichtung kann auch sehr vorteilhaft auf dem Gepäckraumdeckel eines Personenkraftwagens befestigt werden, wobei die Auflageebene der Lasttrageinrichtung derart geneigt verläuft, daß die von ihr getragenen Skier über der Dachhinterkante und der rückwärtigen Oberkante des Gepäckraumdeckels liegen. Da hierbei die Lasttrageinrichtung zum Be-und Entladen der Skier in die Fahrzeugquerebene gedreht werden kann, können die Skier sehr bequem und auch von körperlich kleinen Personen gehandhabt werden. Dabei ist die Anordnung des Gepäckträgers auf dem Gepäckraumdeckel eines Personenkraftwagens auch aerodynamisch sehr vorteilhaft und darüber hinaus in besonderer Weise auch für ein Capriolet sehr geeignet (Merkmal des Patentanspruchs 8).

Weitere Ausgestaltungen der Erfindung sind in anderen Unteransprüchen gekennzeichnet.

Ein Ausführungsbeispiel der Erfindung ist in der Zeichnung dargestellt und wird im folgenden erläutert. Es zeigt

Fig. 1 einen an einem Gepäckraumdeckel angebrachten Gepäckträger, dessen Lasttrageinrichtung mit mehreren, in Fahrzeuglängsrichtung verlaufenden Skiern versehen ist,

Fig. 2 einen Schnitt längs der Linie II-II in Fig. 1 in größerer Darstellung,

Fig. 3 einen am Gepäckraumdeckel angebrachten Gepäckträger, dessen Lasttrageinrichtung gegenüber Fig. 1 um 90° gedreht ist,

Fig. 4 einen Schnitt längs der Linie IV-IV in Fig. 3 in größerer Darstellung.

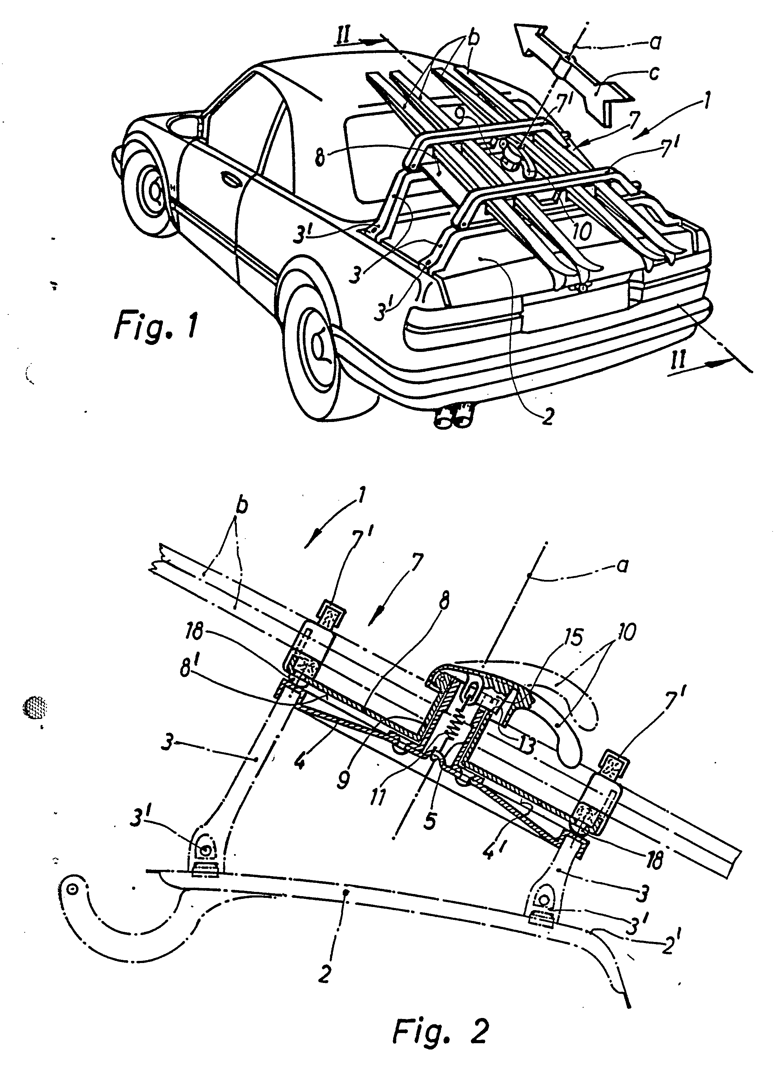

Der in den Fig. 1 bis 4 dargestellte Gepäckträger 1 ist auf dem Gepäckraumdeckel 2 eines Personenkraftwagens angebracht, und besteht aus zwei im Abstand voneinander liegenden Tragelementen 3, welche über eine Tragplatte 4 starr miteinander verbunden sind; diese kann an den Tragelementen 3 lösbar oder unlösbar, also durch Kleben, Schweißen, Schrauben o.dgl. befestigt sein. Schließlich weisen die Tragelemente 3 an ihrem unten liegenden Endabschnitt jeweils einen Befestigungsfuß 3' auf, über den sie mit dem Gepäckraumdeckel 2 verschraubbar sind.

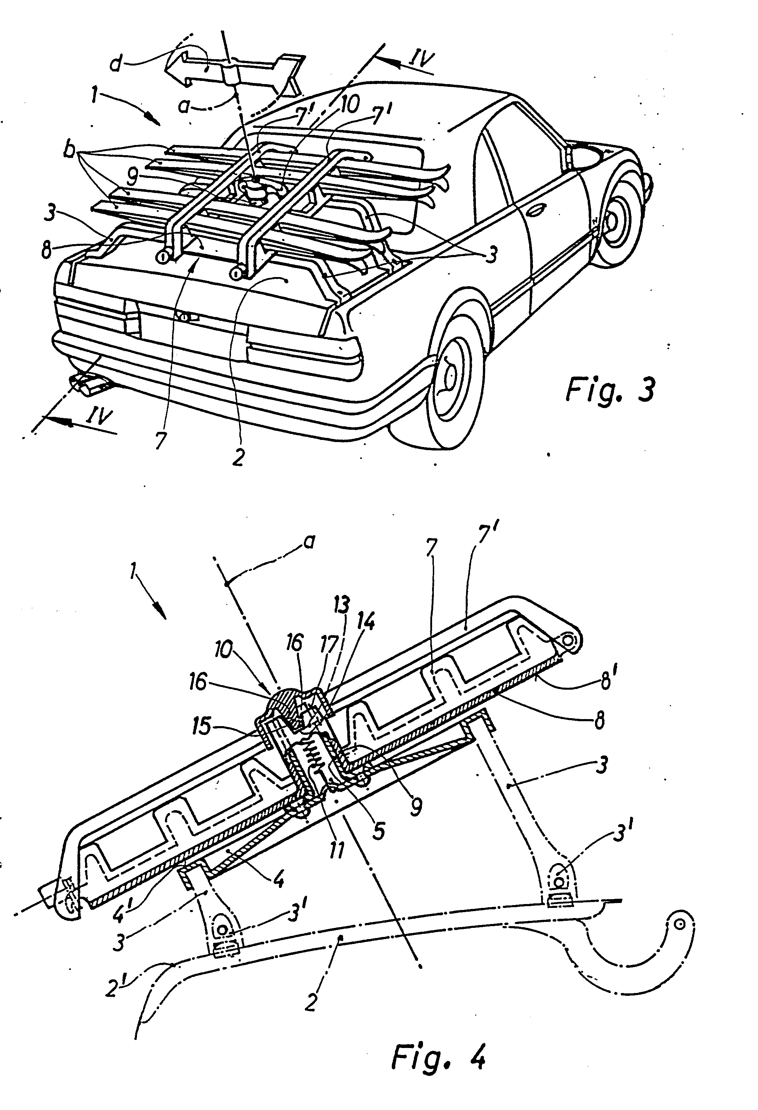

Im Mittelbereich der Tragplatte 4 ist ein hohlzylindrischer Lagerbolzen 5 befestigt, der von ihrer Ebene 4' senkrecht nach oben absteht. Ferner trägt die Tragplatte 4 eine Lasttrageinrichtung 7, welche an ihrer Unterseite mit einer Auflageplatte 8 versehen ist. In deren Mittelbereich ist eine nach oben abstehende Lagerhülse 9 befestigt, die auf dem Lagerbolzen 5 drehbar gelagert ist, so daß dessen Längsmittelachse a senkrecht zu ihrer Auflageebene 8' verläuft. Ferner ist am oben liegenden Abschnitt der Lagerhülse 9 ein rechtwinklig zu den beiden Spannbügeln 7' der Lasttrageinrichtung 7 und damit parallel zu den Skiern b verlaufender Arretierhebel 10 angelenkt. An diesem greift eine Zugfeder 11 an, welche den hohlzylindrischen Lagerbolzen 5 durchsetzt und mit ihrem anderen Ende an der Tragplatte 4 befestigt ist. Dabei hat der Lagerbolzen 5 an seinem dem Arretierhebel 10 zugewandten Endabschnitt zwei nach oben V-förmig offene Rastausnehmungen 13 und 14, welche um 90° winkelversetzt angeordnet und dabei der Fahrzeug längsebene (Rastausnehmung 13) und Fahrzeugquerebene (Rastausnehmung 14) zugeordnet sind. Wie die Fig. 2 und 4 zeigen, ist an der Unterseite des Arretierhebels 10 eine Rastnase 15 angeordnet, die durch die Wirkung der Zugfeder 11 bei sich in Pfeilrichtung c längs erstreckenden Skiern b in die Rastausnehmung 13 gezogen wird, während sie bei in Pfeilrichtung d verlaufenden Skiern b in die Rastausnehmung 14 federbelastet eingreift. Damit die Lasttrageinrichtung 7 bei Drehung um die Achse a in ihre beiden um 90° versetzten Extremlagen entsprechend den Pfeilrichtungen c und d jeweils nicht über den vorgesehenen Drehbereich hinaus gedreht werden kann, ist im Bereich der Rastausnehmungen 13 und 14 jeweils eine Anlageschulter 16 vorgesehen (Fig. 4), an der die Rastnase 15 des Arretierhebels 10 anliegt. Im erwähnten Drehbereich der Lasttrageinrichtung 7 ist am Lagerbolzen 5 eine zwischen dessen oben liegender Stirnseite und der tiefstliegenden Stelle der Rastausnehmungen 13 und 14 vorgesehene Auflageschulter 17 ausgebildet, auf der die Rastnase 15 in Zwischenstellungen der Lasttrageinrichtung 7 aufliegt. Schließlich kann der Arretierhebel 10 in seinen beiden Raststellungen durch ein nicht dargestelltes Schloß abgesperrt werden.

Da beim vorliegenden Ausführungsbeispiel der Gepäckträger 1 auf dem Gepäckraumdeckel 2 eines Personenkraftwagens angebracht ist, ist es für den Transport von langgestreckten Transportgütern wie Skier b oder dgl. erforderlich, daß diese mit ihren Endabschnitten über der Dachhinterkante des Personenkraftwagens und der rückwärtigen Oberkante 2' des Gepäckraumdeckels 2 liegen. Dies wird durch eine entsprechend geneigt verlaufende Auflageebene 8' der Lasttrageinrichtung 7 erreicht, wofür die dem Heckfenster des Personenkraftwagens zugewandten Tragelemente 3 wesentlich höher sind als die im Bereich der rückwärtigen Oberkante des Gepäckraumdeckels 2 liegenden Tragelemente 3. Zur Vermeidung von Klappergeräuschen bei in Pfeilrichtung c gedrehter Lasttrageinrichtung 7 sind an der Unterseite von deren Auflageplatte 8 jeweils längs der Erstreckung der beiden Tragelemente 3 verlaufende gummielastische Dämpfungselemente 18 (Fig. 2) angebracht, die durchlaufend oder auch abschnittsweise angeordnet sein können. Natürlich können sich auch die gummielastischen Dämpfungselemente 18 an der Oberseite der beiden Tragelemente 3 befinden. Ferner sind die Spannbügel 7' und die U-förmigen Aufnahmen der Lasttrageinrichtung 7 jeweils kunststoffummantelt.

Um zu verhindern, daß der Gepäckraumdeckel 2 bei in Pfeilrichtung c verlaufenden Skiern b oder dgl. langgestreckten Transportgütern geöffnet und dadurch das Fahrzeugdach durch die freien, oben liegendne Enden der Skiern b beschädigt werden würde, ist am Gepäckraumdeckel 2 eine mechanisch und/oder elektrisch wirkende Einrichtung angebracht, die bewirkt, daß sich das Schloß des Gepäckraumdeckels 2 nur dann öffnen läßt, wenn die Lasttrageinrichtung 7 in Pfeilrichtung d (Fig. 3) gedreht ist. Dabei kann die Einrichtung auch derart mit dem Schloß des Gepäckraumdeckels 2 zusammenwirken, daß sich dieses bei nicht auf dem Gepäckraumdeckel 2 angeordnetem Gepäckträger 1 normal betätigen läßt. Der mit dem Gepäckträger 1 versehene Gepäckraumdeckel 2 wird am Fahrzeugaufbau zweckmäßigerweise durch stark ausgelegte Gasfedern, Übertotpunkt-Federn oder dgl. abgestützt.

## Ansprüche

1. Gepäckträger für ein Kraftfahrzeug, insbesondere Personenkraftwagen, im wesentlichen bestehend aus wenigstens einem Tragelement mit an jeweils einem Endbereich vorgesehenem und am einem Fahrzeugteil festspannbaren Befestigungsfuß, und mindestens einer Lasttrageinrichtung, welche mit dem Tragelement in gelenkiger Verbindung steht und in Bezug zu diesem in Transportlage festlegbar ist, dadurch gekennzeichnet, daß die Lasttrageinrichtung (7) um eine etwa senkrecht zu ihrer Auflageebene (8') verlaufende Achse (a) drehbar ist.

2. Gepäckträger nach Anspruch 1, dadurch gekennzeichnet, daß die Lasttrageinrichtung (7) um einen Lagerbolzen (5) drehbar ist, der am Tragelement (3) vorgesehen ist.

3. Gepäckträger nach Anspruch 2, mit zwei im Abstand voneinander liegenden und miteinander verbundenen Tragelementen, dadurch gekennzeichnet, daß die Tragelemente (3) über eine Tragplatte (4) starr miteinander verbunden sind, von deren Ebene (4') der Lagerbolzen (5) nach oben absteht, während die Lasttrageinrichtung (7) eine in ihrem Mittelbereich liegende Auflageplatte (8) aufweist, an der eine nach oben abstehende sowie den Lagerbolzen drehbar umgebende Lagerhülse (9) angebracht ist.

4. Gepäckträger nach Anspruch 2, dadurch gekennzeichnet, daß der Lagerbolzen (5) an seinem freien Endabschnitt zwei um etwa 90° winkelversetzt angeordnete, nach oben V-förmig offene Rastausnehmungen (13, 14) aufweist, die der Fahrzeuglängsebene bzw. Fahrzeugquerebene zugeordnet sind und in die jeweils eine an einem Arretierhebel (10) ausgebildete Rastnase (15) federbelastet eingreift, wobei der Arretierhebel an der Lagerhülse (9) angelenkt ist.

5. Gepäckträger nach Anspruch 4, dadurch gekennzeichnet, daß der Arretierhebel (10) parallel zum Transportgut (Skier b) verläuft.

6. Gepäckträger nach Anspruch 4, dadurch gekennzeichnet, daß der Arretierhebel (10) in seiner Ruhelage abschließbar ist.

7. Gepäckträger nach Anspruch 4, dadurch gekennzeichnet, daß die Drehung der Lasttrageinrichtung (7) in ihre beiden um etwa 90° versetzten Extremlagen (Pfeilrichtungen c und d) durch Anlageschultern (16) im Bereich der Rastausnehmungen (13, 14) begrenzt ist.

8. Gepäckträger nach Anspruch 4, dadurch gekennzeichnet, daß bei Anordnung der Tragelemente (3) auf dem Gepäckraumdeckel (2) eines Personenkraftwagens die Auflageebene (8') der Lasttrageinrichtung (7) derart geneigt verläuft, daß ein von diesen getragenes langgestrecktes Transportgut wie Skier (b) oder dgl. über der Dachhinterkante und der rückwärtigen Oberkante (2') des Gepäckraumdeckels liegt.

9. Gepäckträger nach Anspruch 2 oder 3, dadurch gekennzeichnet, daß an der Unterseite der Auflageplatte (8) gummielastische Dämpfungselemente (18) angebracht sind, welche bei parallel zur Fahrzeuglängsachse (Pfeilrichtung c) verlaufendem Transportgut im Bereich der Tragelemente (3) auf der Oberseite der Tragplatte (4) aufliegen.

**Fig. 1**

**Fig. 2**

0 266 550

Fig. 3

Fig. 4

# EUROPÄISCHER RECHERCHENBERICHT

**Europäisches Patentamt**

Nummer der Anmeldung

EP 87 11 4179

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 548 604 (NOEL) <br> * Anspruch 1; Figuren 1,2 * | 1 | B 60 R 9/04 |
| A | | 2,3 | |
| Y | US-A-3 610 491 (BOTT) <br> * Anspruch 1; Figuren 1,2 * | 1 | |
| A | | 8 | |
| A | US-A-3 606 111 (GJESDAHL) <br> * Anspruch; Figuren 1-3 * | 1 | |
| A | US-A-3 378 182 (McMILLER) <br> * Spalte 1, Zeilen 10-33; Figur 1 * | 1 | |

| | |
|---|---|
| | **RECHERCHIERTE SACHGEBIETE (Int. Cl.4)** |
| | B 60 R |

Der vorliegende Recherchenbericht wurde für alle Patentansprüche erstellt

| Recherchenort | Abschlußdatum der Recherche | Prüfer |
|---|---|---|
| DEN HAAG | 26-01-1988 | MAUSSER,T. |

EPO FORM 1503 03.82 (P0403)